# EUROPEAN PATENT SPECIFICATION

(11) **EP 1 514 386 B1**
(45) Date of publication and mention of the grant of the patent: **08.07.2009**
(21) Application number: 03724240.1
(22) Date of filing: 24.04.2003
(51) Int. Cl.: H04L 12/56

(54) **ESTABLISHING AN AD HOC NETWORK**
ERRICHTEN EINES AD-HOC-NETZES
ETABLISSEMENT D'UN RESEAU AD HOC

(30) Priority: 26.04.2002 US 133101
(43) Date of publication of application: 16.03.2005
(73) Proprietor: Intel Corporation, Santa Clara, CA 95052 (US)
(72) Inventor: DREWS, Paul, Gaston, OR 97119 (US); BAHR, Casey, Hillsboro, OR 97123 (US); MANDAL, Sushim, Portland, OR 97229 (US); SCHUETZE, Joel, Forest Grove, OR 97116 (US)
(74) Representative: Beresford, Keith Denis Lewis
(86) International application number: PCT/US2003/012902
(87) International publication number: WO 2003/092205

(56) References cited:
- EP-A- 1 107 522
- WO-A-01/24386
- WO-A-01/41348
- WO-A-01/45437
- WO-A-02/39674
- WO-A-02/43333

## Description

### BACKGROUND

### 1. Field

The claimed subject matter relates to establishing an ad hoc network and, more particularly, to the establishment of an ad hoc network utilizing a node and a plurality of nodelets.

### 2. Background Information

In order for a mobile terminal to connect to a wireless network, the mobile terminal is typically required to be within range of an access point (which may, in some cases, be permanently located). Because each access point has a substantially fixed communication range, a single access point may not provide wireless network access to a large area. Therefore, in order to increase the area in which network access is provided, one often adds additional access points or provides access points with greater communication ranges than the original access points.

Either option for increasing the area in which the network is functional is expensive. Providing additional access points, often referred to as "antennas" or "towers," causes the network provider to incur the cost of the physical access point devices, and possibly an additional cost for renting or leasing the physical space the access point occupies. Increasing the communication range of the access point is often expensive due to the research cost in developing an access point with increased range and the ongoing cost of providing additional power to the access point. Similar issues may exist if the network is established via physically coupled devices. A need, therefore, exists for an improved system or technique for establishing an ad hoc network.

US 6304556 discloses a routing protocol and a mobility management protocol.

The routing protocol is a proactive-reactive hybrid routing protocol that limits the scope of the proactive procedure to the node's local neighbourhood. Each node only needs to know the topology of the network in its routing zone. During route discovery, the reactive procedure is limited to queries of only those nodes located on the periphery of routing zones. In this manner, the queries hop across nodes in distances of zone radius, thus limiting the scope of the reactive procedure.

In the mobility management protocol, each network node is "associated" with one or more mobility management nodes. The mobility management nodes form a virtual network within the actual ad-hoc network. Each mobility management node knows and communicates the location of all nodes within its zone to any other mobility management node that requests it.

### BRIEF DESCRIPTION OF THE DRAWINGS

Subject matter is particularly pointed out and distinctly claimed in the concluding portions of the specification. The claimed subject matter, however, both as to organization and the method of operation, together with objects, features and advantages thereof, may be best understood by a reference to the following detailed description when read with the accompanying drawings in which:
FIG. 1 is a block diagram illustrating an ad hoc network established in accordance with the claimed subject matter;
FIG. 2 is a block diagram illustrating an ad hoc network established in accordance with the claimed subject matter;
FIG. 3 is a flowchart diagram illustrating establishing and utilizing an ad hoc network in accordance with the claimed subject matter;
FIG. 4 is a flowchart diagram illustrating establishing an ad hoc network in accordance with the claimed subject matter;
FIG. 5 is a block diagram illustrating an ad hoc network established in accordance with the claimed subject matter;
FIG. 6 is a block diagram illustrating an ad hoc network established in accordance with the claimed subject matter;
FIG. 7 is a block diagram illustrating an ad hoc network established in accordance with the claimed subject matter;
FIG. 8 is a block diagram illustrating an ad hoc network established in accordance with the claimed subject matter; and
FIG. 9 is a flowchart diagram illustrating technique to utilize an ad hoc network established in accordance with the claimed subject matter.

### DETAILED DESCRIPTION

In the following detailed description, numerous details are set forth in order to provide a thorough understanding of the present claimed subject matter. However, it will be understood by those skilled in the art that the claimed subject matter may be practiced without these specific details. In other instances, well-known methods, procedures, components, and circuits have not been described in detail so as to not obscure the claimed subject matter.

As used herein, a node is a device that is permanently or primarily located in a fixed place and provides access to a network. Examples of such a network may include networks, such as, for example, the Internet, the telephone system, or a cable television network. While the illustrated embodiments of the claimed subject matter deal mainly with access to the Internet, one skilled in the art will understand that various embodiments may be easily adapted to interface with a variety of networks and that the claimed subj ect matter is not limited to any particular network. One skilled in the art will also understand that a node may not be directly coupled to a network backbone; a node may merely serve as a gateway to another network, which in turn provides access to a network backbone.

As used herein, a nodelet is a device that is often not permanently located in a fixed place and utilizes a node to gain access to the network backbone. Examples of such a device may include devices, such as, for example, cellular telephones, handheld computers, personal digital assistants, media players and mobile computers. However, one skilled in the art will understand that these are merely a few non-limiting examples of such a device. Nodelets often, but not necessarily, serve as interactive user terminals to the network. A nodelet may connect to a node via a wireless protocol. Such a wireless protocol may involve technologies, such as, for example, radio frequency communication or infrared frequency communication. However, one skilled in the art will realize that other wireless technologies utilizing communication via other frequencies may be utilized.

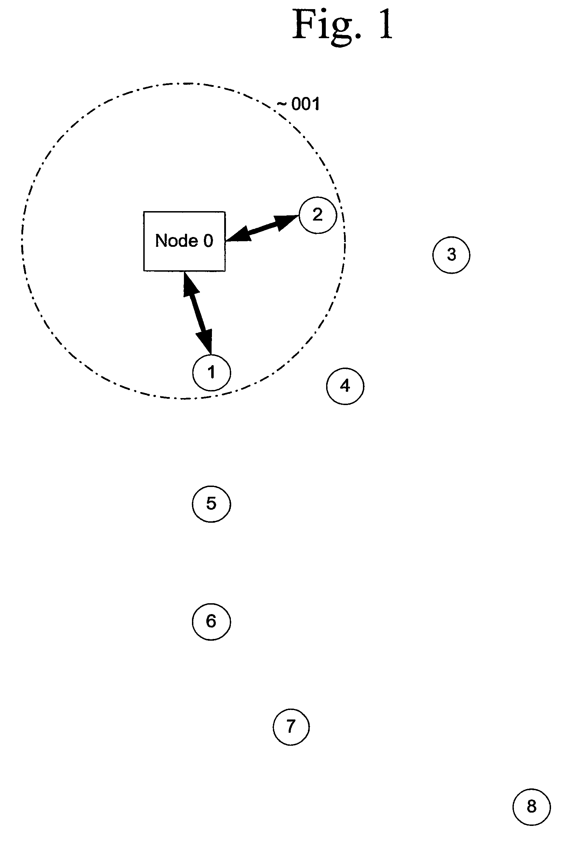

FIG. 1 is a block diagram illustrating an embodiment of the claimed subject matter. Node 0 may be established in a fixed place and provides access to a network backbone. In a specific example, to which the claimed subject matter is not limited, node 0 may be situated in a public place, such as, for example, a coffee house. In this specific example, node 0 may provide access to the Internet to members of the public. Of course, one skilled in the art will realize that a node may be located in a variety of locations, both public and private, and may provide access to a variety of networks.

Node 0 may utilize a wireless protocol that has a limited range 001. In the specific example above, the coffee house node may utilize a protocol, which is substantially in compliance with, for example, the IEEE 802.11b wireless local area network (WLAN) standard. *Supplement to 802.11-1999, Wireless LAN MAC and PHY specifications: Higher speed Physical Layer (PHY) extension in the 2.4 GHz band,* IEEE Std. 802.11b-1999 (hereafter "802.11b"). In another embodiment of this specific example, the coffee house node may utilize a protocol, which is substantially in compliance with, for example, any standard derived or supplemental to the IEEE 802.11 wireless local area network (WLAN) standard (hereafter, "the 802.11 standard or specification family"). *Standards for Information Technology - Telecommunications and Information Exchange between Systems -- Local and Metropolitan Area Network - Specific Requirements - Part 11: Wireless LAN Medium Access Control (MAC) and Physical Layer (PRY) Specifications,* ANSI/IEEE Std. 802.11-1999 (hereafter "802.11").

Of course, one skilled in the art will understand that these are merely a few specific examples of wireless protocols and that a variety of protocols may be used, such as for example, a protocol which utilizes frequencies in the infrared spectrum, a protocol which utilizes frequencies in the radio spectrum, a protocol substantially in compliance with those typically used for cellular telephone communication or, in yet another example, a protocol substantially in compliance with the Bluetooth wireless specification. *Specification of the Bluetooth System,* Bluetooth SIG ver. 1.1, Feb. 22, 2001 (hereafter, "Bluetooth"). Of course, one skilled in the art will realize that these are merely a few non-limiting examples and other communication protocols may also be used.

Because the wireless protocol utilized by node 0 has a limited range 001, it may only communicate with nodelets that are within that limited range. In the embodiment illustrated by FIG. 1, only nodelets 1 and 2 are within the limited communication range of node 0 and may communicate with node 0. In this illustration, it is assumed that the limited communication ranges of node 0 and nodelets 1-8 are equidistant. One skilled in the art will realize that is merely a simplification made for illustrative purposes and the claimed subject matter is in no way limited to embodiments where all nodelets and/or nodes have equidistant communication ranges.

In the specific example above, nodelets 1-8 may be mobile devices, such as, for example, notebook computers, cellular telephones, personal digital assistants, or media players, which might utilize a network connection to provide access to media. However, one skilled in the art will understand that these are merely a few non-limiting examples that is not limiting on the claimed subject. For the specific example above, which the claimed subject matter is not limited by, nodelets 1-8 will be considered smart cellular telephones that are capable of accessing the Internet.

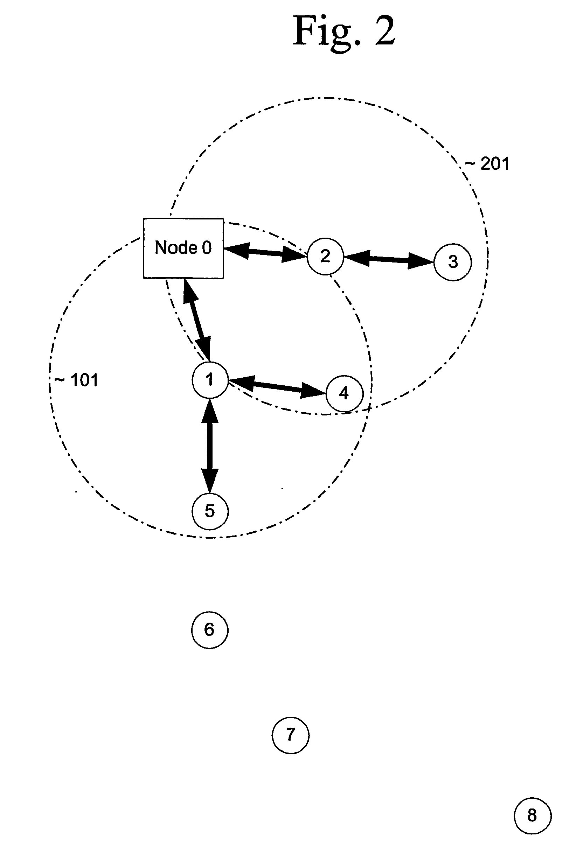

FIG. 2 is a block diagram illustrating an embodiment of the claimed subject matter. FIG. 2 builds upon the embodiment illustrated in FIG. 1. Nodelets 1 and 2 are in the communication range of node 0, and, therefore, may be in communication with node 0. Nodelets 3-8 are not within the communication range of node 0, and, therefore, may not be in direct communication with node 0. As previous stated, for illustrative purposes it is assumed that all nodelets and nodes have equidistant communication ranges; however, the claimed subject matter is not limited to this case. Nodelet 1 has a communication range 101, which allows communication with node 0, nodelet 5 and nodelet 4. Nodelet 2 has a communication range 201, which allows communication with node 0, nodelet 3, and nodelet 4.

In the specific example above, node 0 may be considered to be placed in the north-east corner of a square coffee house. This node may have a communication range which extends to just over the middle section of the coffee house. If a patron carrying a smart cellular phone, represented by nodelet 1, sits in the middle of the coffee house, the patron's cellular phone may be in direct communication with node 0. A second patron, sitting in the south-west corner of the coffee house may have a smart cellular phone, represented by nodelet 5. Because the second patron's cellular phone is outside the communication range of node 0, it may not access the network backbone. However, the second patron's cellular phone, node 5, may be in range of the first patron's cellular phone, node 1. One skilled in the art will realize that this is merely a specific illustrative example, and other embodiments of the claimed subject matter are possible.

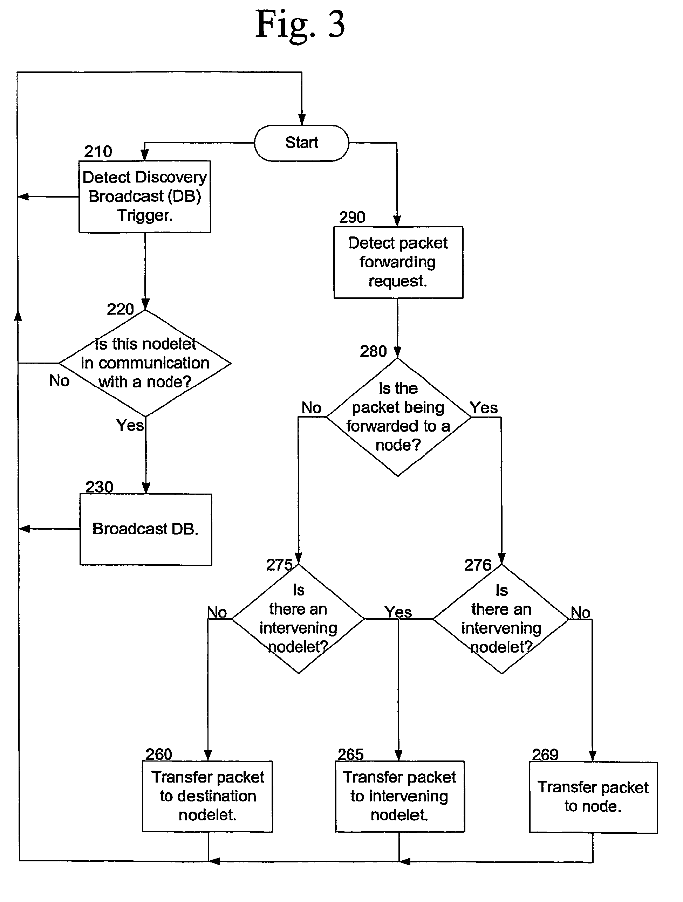

FIG. 3 illustrates an embodiment of a technique that nodelets 1 and 2 may utilize in order to establish an ad hoc network allowing communication between node 0 and nodelets 3-5. As represented by action 210, nodelet 1, or respectively nodelet 2, may detect a trigger that initiates the transmission of a discovery broadcast. A discovery broadcast, in this context, is a transmission, which allows other nodelets to establish themselves within an ad hoc network. One skilled in the art will realize that a variety of triggers may be utilized for this purpose. Such triggers may involve, for example, a timer, a user configured parameter, a request signal from another device, a request from the network, or a signal derived from the status of the network. However, these are merely a few non-limiting examples that the claimed subject matter is not limited.

Action 220 illustrates that the nodelet may not transmit a discovery broadcast if it is not in communication with a node. One skilled in the art will realize that other gating factors may limit the transmission of a discovery broadcast, and that this is merely one example.

Action 230 illustrates the transmission of the discovery broadcast. In the embodiment illustrated in FIG. 2, a discovery broadcast may be an omni-directional transmission that allows nodelets, which are not in communication with the node, to establish communication with the node. Such a discovery broadcast may contain many forms of information, such as, for example, the number of nodelets between (in a network topology sense) the node and the broadcasting nodelet, the throughput of the communication between the nodelet and the node, a marker that is related to the quality of service of the communication between broadcasting nodelet and the node, or a unique identifier related to the nodelet. One skilled in the art will understand that such a discovery broadcast may take many forms and that the examples above are merely a few non-limiting instances. For example, a discovery broadcast need not be omni-directional. One skilled in the art will further understand that a quality of service marker may include many elements, such as, for example, the nodelet's reliability in properly forwarding data; however, this is merely one example of many elements that may be included in a particular form of a quality of service marker. In another embodiment of the claimed subject matter, the discovery broadcast may be a series of transmissions between the nodelet in communication with the node and an unconnected nodelet. One skilled in the art will understand that the discovery broadcast may take a variety of forms.

In the non-limiting specific example above, the first patron's smart cellular phone, nodelet 1 of FIG. 2, may be configured to transmit a discovery broadcast every (to choose a non-limiting arbitrary number for illustrative purposes) 60 seconds. Of course, one-skilled in the art will realize that a timer set to any measurement of time is merely one form of trigger that may be utilized to regulate the transmission of a discovery broadcast and that this is merely an illustrative example. At the designated time, nodelet 1 may transmit a discovery broadcast in order to inform any other nodelets that nodelet 1 is in communication with node 0, that it is in direct communication with node 0, and that it has a unique identifier, which may be, in this example, 1. Once again, one skilled in the art will understand that this is merely a specific illustrative example and that the claimed subject matter is not limited to discovery broadcasts which contain any one set of information.

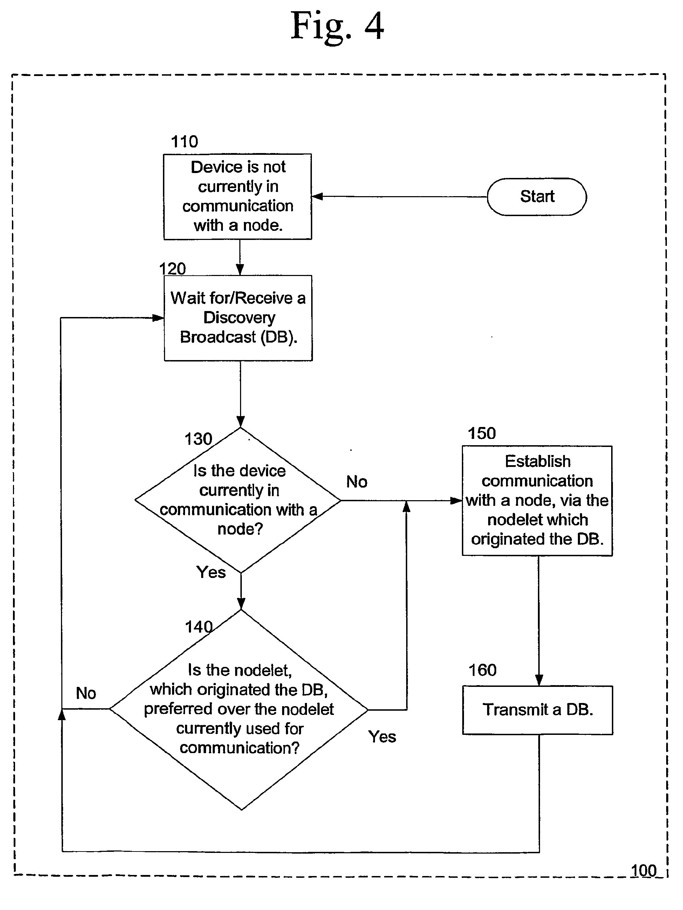

FIG. 4 illustrates a technique or series of actions that a nodelet, which is not currently in communication with a node, *i.e*., an unconnected nodelet, may take in order to establish an ad hoc network in accordance with the claimed subject matter. Action 110 illustrates that a nodelet will often start in a position where it is not in communication with a node. Action 120 illustrates that this nodelet may wait until it receives a discovery broadcast. As above, one skilled in the art will understand that a discovery broadcast may take many forms and in some of those forms the discovery broadcast may be initiated by an unconnected nodelet. However, in the embodiment illustrated by FIG. 4, and the specific non-limiting example above, the discovery broadcast is initiated by a nodelet that is already in communication with a node.

Action 150 illustrates that an unconnected nodelet may establish communication with a node via the nodelet that originated the discovery broadcast. Because the nodelet that originated the discovery broadcast is between (in a network topology sense) the unconnected nodelet and the node, it is referred to as an "intervening nodelet." One skilled in the art will realize that establishing communication with a node may take many forms. For example, establishing communication may involve transmitting a broadcast to the node that registers the new nodelet on the network or, conversely, the newly connected nodelet may internally note that it is currently established on the network and postpone transmission of data to the node until the nodelet desires access to the network backbone. One skilled in the art will realize that these are merely two alternative techniques for establishing communication with the node and that other techniques may be used.

Action 160 illustrates that upon establishing communication with a node, via the nodelet which originated the discovery broadcast, the nodelet may in turn transmit a new discovery broadcast. This may allow additional nodelets to establish a connection to the node via the newly connected nodelet. Of course one skilled in the art will understand that other techniques may be used to perpetuate the ad hoc network and that this is merely one example.

In the specific example above, the second patron's smart cellular phone, nodelet 5 of FIG. 2, is not in direct communication with node 0. As previously described, the first patron's cellular phone, nodelet 1, is in communication with node 0 and is transmitting discovery broadcasts. The second patron's smart cellular phone is within direct communication range of the first patron's cellular phone and receives the discovery broadcast. Upon receiving the discovery broadcast, nodelet 5 establishes communication between itself and node 0, via nodelet 1. The first patron's cellular phone is now considered an intervening nodelet in regards to the second patron's cellular phone. In this example, establishing communication between nodelet 5 and node 0 is done by registering nodelet 1 as an intervening nodelet with nodelet 5 and withholding the transmission of data to node 0 until access to the Internet is desired. The second patron is now able to access the Internet using his smart cellular phone, which is in communication with node 0 via nodelet 1. Similar actions, as illustrated regarding nodelets 1 and 5, may be performed for nodelets 2 and 3, respectively. One skilled in the art will understand that this is merely one detailed example of an embodiment of the claimed subject matter and many other embodiments are possible.

FIG. 2 also illustrates an embodiment where nodelet 4 is within both nodelet 1's communication range 101 and nodelet 2's communication range 201. FIG. 4 illustrates actions, which may be taken when a particular nodelet receives discovery broadcasts from more than one nodelet. Action 140 illustrates that, when a nodelet receives substantially simultaneous discovery broadcasts or a discovery broadcast when it is already in communication with the node, the nodelet must select which broadcasting nodelet to utilize for communication with the node. A nodelet might prefer one broadcasting nodelet over another utilizing many factors, such as, for example, the signal strength of the broadcasting nodelets, the number of intervening nodelets associated with the broadcasting nodelets, the communication range of the nodelets, the network throughput of the broadcasting nodelets, a quality of service marker associated with the broadcasting nodelets, or the status of prior communications with one or more of the broadcasting nodelets. One skilled in the art will understand that these are merely a few non-limiting examples of factors, which may be considered when choosing which nodelet to communicate with. One skilled in the art will understand that the factors to be considered may be statically, semi-dynamically, or dynamically configured. In the embodiment illustrated by FIG. 2, nodelet 4 preferred to communicate with node 0 via nodelet 1.

In the specific example above, the second patron, whose smart cellular phone is represented by nodelet 5 of FIG. 2, may wish to access the Internet. To do so nodelet 5 may request that nodelet 1 forward a packet to node 0. In this context, a packet is a quantum of data that is transmitted across the network. One skilled in the art will realize that a packet may take many forms depending upon the communication protocol used by the network. For example, the protocol may refer to a quantum of data as a stream, burst, or packet. In addition, these quanta may be broken into discrete units or, conversely, an entire transmission may involve a continuous flow of data; however, one skilled in the art will understand that, in this context, any transmission of data in whole or in part is referred to as a packet.

FIG. 3 illustrates an embodiment that includes a technique for forwarding packets from a source nodelet, in this example, nodelet 5 of FIG. 2, to a node. Action 290 of FIG. 3 illustrates the detection, by an intervening nodelet, in this example, nodelet 1 of FIG. 2, of a request to forward a packet. Action 280 of FIG. 3 illustrates that the intervening nodelet may check to determine the final destination of the packet within the ad hoc network. Specifically, this may involve determining if the packet is being forwarded to a node or a nodelet.

At this time, the intervening nodelet may check that at least a partial route exists between the intervening nodelet and the packet's destination within the ad hoc network. One skilled in the art will understand that this action may take many forms, such as, for example, the routing information may be stored within the intervening nodelet, the routing information may be stored within the packet, the intervening nodelet may query a central source for routing information, or the intervening nodelet may assume that the node or next intervening nodelet it is in communication with is the proper recipient of the packet. One skilled in the art will realize that this routing information is highly influenced by the communication protocol used by the nodelets and is not limited to any particular embodiment of the claimed subject matter.

Also, at this time, the intervening nodelet may take the opportunity to build a routing table that would allow future packets from the node to the current source nodelet to be forwarded properly. One skilled in the art will understand that this example is merely one embodiment of the claimed subject matter. One skilled in the art will also understand that such a routing table could be established, for example, only the first time a packet is sent from a nodelet to the node, or, at the other end of the spectrum, the table may be updated every time a packet is sent from a nodelet to the node. However, these are merely non-limiting examples of particular embodiments of the claimed subject matter.

If, as in the specific example, a packet is being sent from a source nodelet to the node, action 276 illustrates that, if there are multiple intervening nodelets between (in a network topology sense) the source nodelet and the node, the current intervening nodelet will forward the packet to the next intervening nodelet. This is illustrated by action 265. One skilled in the art will understand that this forwarding process may be repeated for each intervening nodelet. Alternately, if there are no intervening nodelets, the packet may be forwarded directly to the node. This is illustrated by action 269.

In the specific coffee house example, the second patron's access of the Internet may create a request, by nodelet 5 of FIG. 2, to forward a packet to node 0. This forwarding request may be received by nodelet 1. Nodelet 1 will then forward this packet, directly to node 0. In this specific example, nodelet 1 may create a routing table, which informs it that nodelet 5 is in direct communication with nodelet 1. One skilled in the art will understand that this coffee house example is merely a particular embodiment of the claimed subject matter and many other embodiments are possible.

FIG. 3 also illustrates the actions, which may be performed by an intervening nodelet when a packet is forwarded from a node to a destination nodelet. The set of actions is very similar to actions 290, 280, 276, 265, and 269 described above. In this instance, if the intervening nodelet is in direct communication with the destination nodelet, the packet may be transferred to the destination nodelet, as illustrated by action 260. Actions 275 and 265 illustrate that, if the intervening nodelet is not in direct communication with the destination nodelet, the packet may be forwarded to the next intervening nodelet. One skilled in the art will understand that the same variations and issues as discussed in the source nodelet to node case, previously described, apply.

To continue the specific coffee house example, if a web page is being delivered to the second patron's smart cellular phone, as represented by nodelet 5 of FIG. 2, nodelet 0 may broadcast a request to forward a particular packet to nodelet 5. In this example, the request may be broadcast in an omni-directional fashion and be received by both nodelets 1 and 2. One skilled in the art will understand that other means of making the request may be utilized and this is merely one example. Nodelet 2 may find that it knows of no proper route to nodelet 5 and refuse to forward the packet. Nodelet 1 may examine the routing table that was built when nodelet 5 transmitted to node 0, and because nodelet 1 has a route, accept the forwarding request. One skilled in the art will realize that other communication protocols may be used and that this is only one specific illustrative example of an embodiment of the claimed subject matter. Nodelet 1 may then forward the packet to nodelet 5. The second patron may then be able to view the web page he previously requested. One skilled in the art will understand that other forms of data may be received and placed on the network and that this is purely an illustrative example.

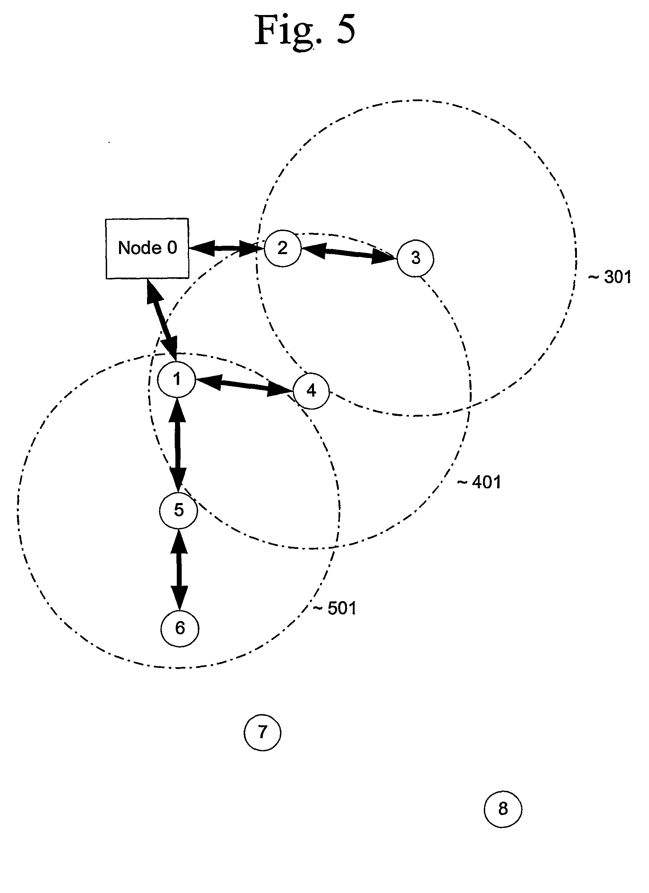

FIG. 5 illustrates an embodiment of the claimed subject matter where the actions and system illustrated in FIG. 2 may be repeated and extended. Nodelet 3 has a communication range 301. Nodelet 4 has a communication range 401. Nodelet 5 has a communication range 501. Nodelets 3-5 may make discovery broadcasts as illustrated by actions 210-230 of FIG. 3. No additional unconnected nodelets are found within the communication ranges of nodelets 3 or 4. Therefore, nodelets 3 and 4 may be referred to as the most distant nodelets of their portion of the network. Nodelet 6 is an unconnected nodelet and is within the communication range of nodelet 5. In the specific coffee house example, nodelet 6 may be considered a third patron who is sitting at an outside table.

Therefore, the actions illustrated in FIG. 4, and described above, may be performed in order to establish communication between nodelet 6 and node 0, via nodelets 5 and 1. Nodelets 5 and 1 are considered intervening nodelets in regard to nodelet 6. One skilled in the art will understand that this is merely one embodiment of the claimed subject matter and the same variations and concerns described above regarding FIG. 2 are present in FIG. 5.

In addition, nodelet 6 of FIG. 5, may send packets to and receive packets from node 0 in much the same manner as described above in regards to nodelet 5. In the embodiment illustrated by FIG. 5, nodelet 1 would forward packets from node 0 and destined to nodelet 6, to the intervening nodelet 5. This is illustrated by actions 290, 280, 275, and 265 of FIG. 3. In turn, nodelet 5 of FIG. 5 would forward these packets to destination nodelet 6. This is illustrated by actions 290, 280, 275, and 260 of FIG. 3. Likewise, as illustrated by actions 290, 280, 276, and 265 of FIG. 3, nodelet 5 of FIG. 5 would forward packets, from nodelet 6 and destined for node 0, to the intervening nodelet 1. Nodelet 1 would then forward the packets to node 0. One skilled in the art will understand that this is merely one embodiment of the claimed subject matter and the same variations and concerns described above are present in this embodiment.

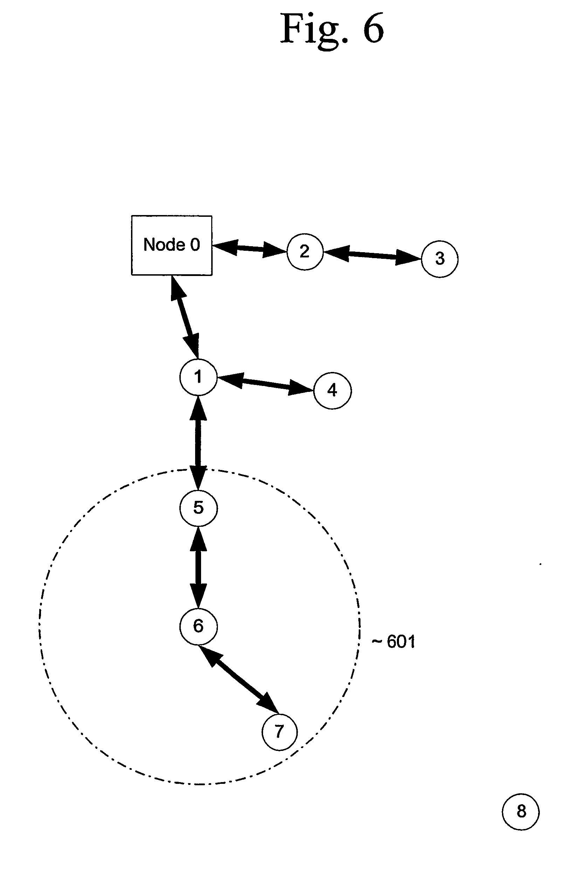

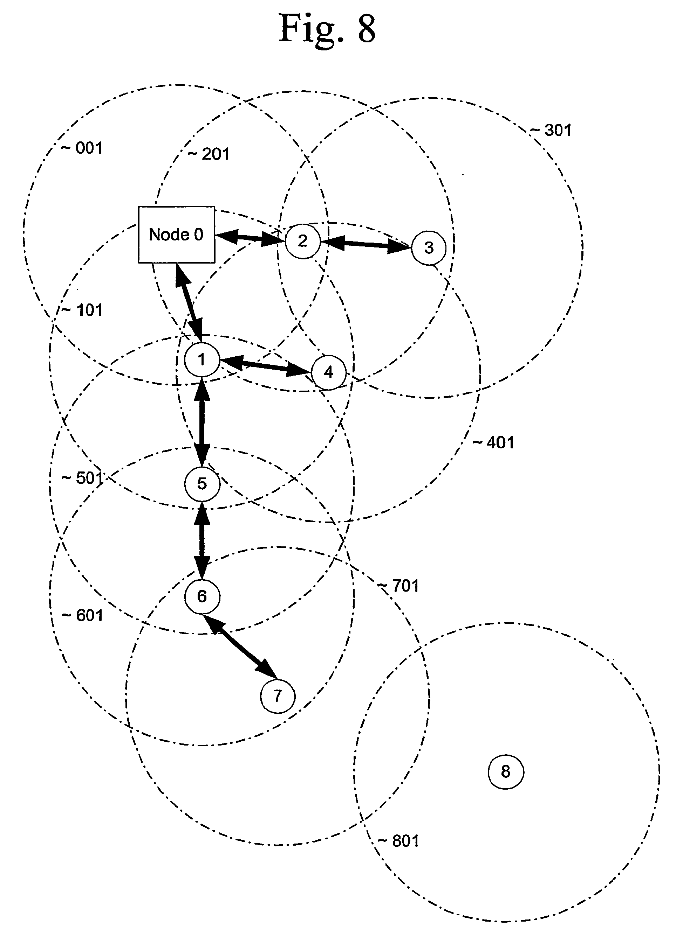

FIG. 6 illustrates and embodiment that shows the further extendibility of the system and techniques previously discussed. In this particular embodiment, nodelet 6 is an intervening nodelet in regards to nodelet 7. One skilled in the art will understand that this network may be further extended. One skilled in the art will also understand that, as illustrated by the embodiment of FIG. 8, the topology of such a network need not be symmetrical or take any particular predefined shape.

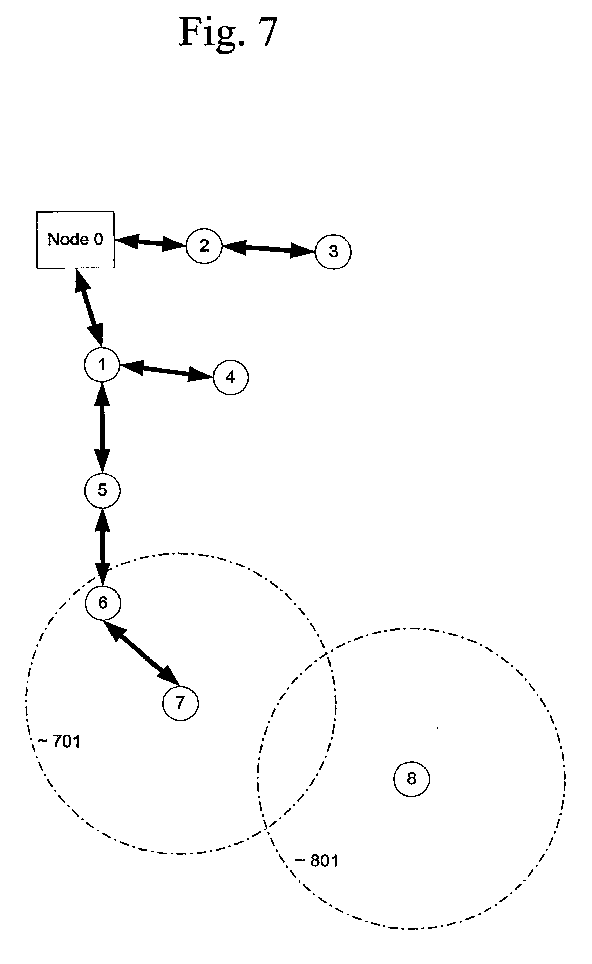

FIG. 7 illustrates an embodiment of the claimed subject matter where a nodelet is too far out of communication range to establish communication with the node. In this example, nodelet 8 is outside of nodelet 7's communication range 701. Therefore, it is not able to move beyond action 110 of FIG. 4. In order to connect to the network and establish communication with the node, the owner of node 8 will typically move within the communication range of one of the established nodelets or the node. One skilled in the art will understand that, if an established nodelet moves out of range of one of the established nodelets or the node, the nodelet may lose a connection with the network. One skilled in the art will understand that the techniques for gracefully disconnecting from a network are well known.

In one embodiment, FIG. 8 may illustrate a system, which includes a node, node 0, and a number of nodelets, nodelets 1-7, that are in communication with the node. Specifically, nodelets 3-7 are in communication with node 0 via at least intervening nodelets 1 or 2. Each nodelet in the embodiment, illustrated by FIG. 8, may be capable of, during operation, performing the actions shown in FIGs. 3 and 4. Of course, one skilled in the art will understand that other embodiments may be created that produce a system in compliance with the claimed subject matter. One skilled in that art will also understand that any communication conducted amongst the nodelets and nodes illustrated in FIGs 1, 2, and 5-8 may be conducted in the secure fashion. Also, one skilled in the art will understand that communication between nodelets, with or without the utilization of node 0, is contemplated. One skilled in the art will further understand that a system may involve multiple nodes. Furthermore, one skilled in the art will understand that while a substantially wireless network is illustrated in FIGs. 1, 2, and 5-8, a particular embodiment of the claimed subject matter may contain a mix of wired and wireless technologies, or, alternative, an entirely wired network.

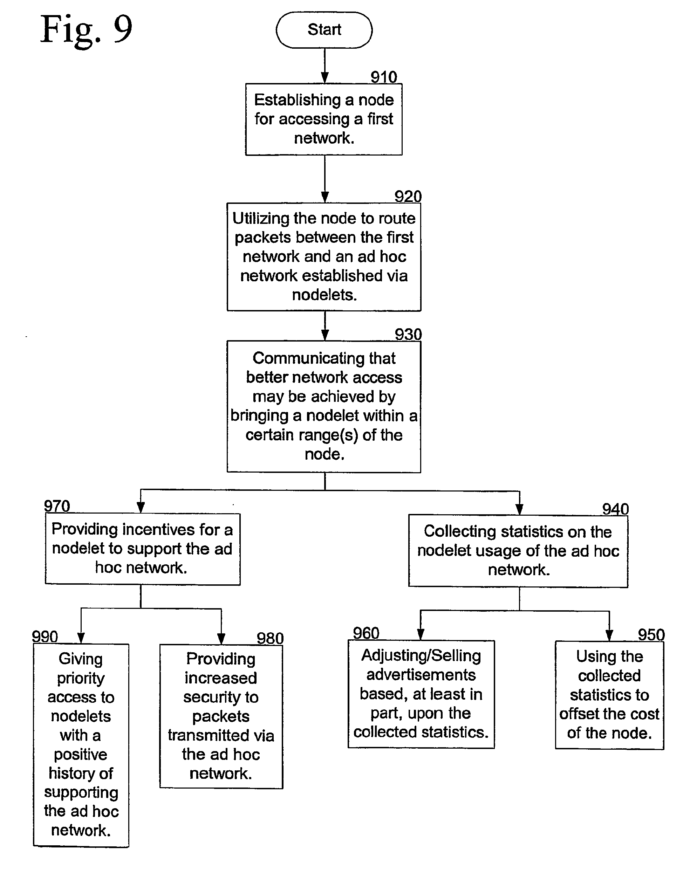

FIG. 9 illustrates a technique or series of actions that may be used to facilitate a business incorporating the claimed subject matter. Action 910 illustrates that a node for accessing a first network may be established in a particular location. This location may be a public place, such as, for example, a restaurant, café, or a bookstore. Of course, one skilled in the art will understand that these are merely a few non-limiting examples and that a number of private places may also be used. Action 920 illustrates that this node may be used to route packets between the first network and an ad hoc network. One skilled in the art will understand that an example of a first network, may include access to a network backbone, such as, for example, the Internet. Such an ad hoc network may be established utilizing a number of nodelets. The establishment of one embodiment of such a network has been detailed above. Of course, one skilled in the art will understand that other ad hoc network schemes may be used.

Action 930 illustrates that a the owner of the node or location where the node is physical located, such as, a business, may communicate, via, for example, advertising, that better network access may be achieved by bringing a nodelet with in a certain range, or ranges, of the node. One skilled in the art will understand that, used herein, the term "business" refers to both the full spectrum of commercial enterprises (from sole proprietorship to partnership to corporation), and a number of non-commercial or non-profit associations. In a specific example, the coffee house, as described above, may place a node within the coffee house and advertise that better network access may be achieved if patrons come with the coffee house.

One skilled in the art will realize that a business may do this for many reasons, such as, for example, a belief that. if the patrons are lured into the store by network access, the patrons will purchase more products or services. Of course, one skilled in the art will conceive of additional reasons a business may provide network access to the business' patrons. One skilled in the art will also realize that a business may either charge for network access or provide that access for free.

Action 940 illustrates that a business may collect statistics on a nodelet's usage of the ad hoc network. One skilled in the art will understand that a variety of statistics may be collected, such as, for example, the amount of time spent by a nodelet within a certain range of the node, the marketing demographics of the user of the nodelet, the content accessed by the nodelet, the support provided by the nodelet for the ad hoc network, and the location of the nodelet. Of course, one skilled in the art will further understand that these are merely a few non-limiting examples of statistics that may be collected from the ad hoc network. In this context, support of the ad hoc network may include actions or services that promote the growth, development and maintenance of the ad hoc network, and are further described in relation to Action 970.

Action 960 illustrates that a business may adjust or sell marketing and advertising based, at least in part, upon the collected statistics. For example, the coffee house may change the advertisements for coffee and the types of coffee or other products sold based, at least in part upon the collected statistics. In another example, the coffee house may use the collected statistics to sell advertising space within the coffee house to other businesses. In yet a third example, the coffee house may turn the collected statistics into an additional product that is sold to marketing research firms. One skilled in the art will understand that these are merely a few examples of how the collected statistics may be used and that other possibilities exist.

Action 950 illustrates that the collected statistics may utilized in a way, such as, for example, to increase sales of existing products, or the sale of new products, to offset the cost of the node and the cost of providing access to the first network. These collected statistics may also be used to justify or rationalize the cost of the node to the business' management or other decision makers.

Action 970 illustrates that incentives may be provided in order to encourage a nodelet to support the ad hoc network. In this context, support of the ad hoc network may include actions or services that promote the growth, development and maintenance of the ad hoc network. Such support may include, for example, forwarding packets between the node and other nodelets, providing personal information to the owner of the node, or utilizing the nodelet to allow other nodelets to join the ad hoc network. One skilled in the art will understand that these are a few non-limiting examples and that a number of techniques or actions which support the ad hoc network may be conceived.

Action 990 illustrate an example of an incentive that may be used to encourage actions which support the ad hoc network. The business may provide a number of incentives to nodelets with a positive history of supporting the ad hoc network, such as, for example, giving priority network access the nodelets, giving users of the nodelets coupons for products or services, or transmitting marketing promotions regarding products or services to the nodelet, or giving the user of the nodelet cash, or a substantially equivalent form of credit, that may be used for the purchase of products or services. A specific example of such an incentive may include giving frequent flyer miles to a user that supports the creation of an ad hoc network at an airline's airport terminal. One skilled in the art will realize that other forms of substantially cash equivalent credits may be utilized. Of course, one skilled in the art will understand that other incentives may be used.

Action 980 illustrates that the ad hoc network may provide increased security to packets transmitted via the network. One skilled in the art will realize that many techniques for providing security are known. One skilled in the art will also understand that such security may be used to provide private communication between the node and a nodelet.

The techniques described herein are not limited to any particular hardware or software configuration; they may find applicability in any computing or processing environment. The techniques may be implemented in hardware, software or a combination of the two. The techniques may be implemented in programs executing on programmable machines such as mobile or stationary computers, personal digital assistants, and similar devices that each include a processor, a storage medium readable by the processor (including volatile and non-volatile memory and/or storage elements), at least one input device, and one or more output devices. Program code is applied to the data entered using the input device to perform the functions described and to generate output information. The output information may be applied to one or more output devices.

Each program may be implemented in a high level procedural or object oriented programming language to communicate with a processing system. However, programs may be implemented in assembly or machine language, if desired. In any case, the language may be compiled or interpreted.

Each such program may be stored on a storage medium or device, e.g. compact read only memory (CD-ROM), digital versatile disk (DVD), hard disk, magnetic disk or similar medium or device, that is readable by a general or special purpose programmable machine for configuring and operating the machine when the storage medium or device is read by the computer to perform the procedures described herein. The system may also be considered to be implemented as a machine-readable storage medium, configured with a program, where the storage medium so configured causes a machine to operate in a specific manner. Other embodiments are within the scope of the following claims.

While certain features of the claimed subject matter have been illustrated and described herein, this patent is not limited thereto. On the contrary, this patent covers all methods, systems, and articles of manufacture fairly falling within the scope of the appended claims.

## Claims

1. A method of establishing communication between a plurality of nodelets and a node operable to provide access to a network, wherein each of the nodelets is operable to transmit a discovery broadcast over a limited range (001-801) utilizing a wireless communication protocol, the method comprising:
a first nodelet establishing communication with the node;
the first nodelet, in response to a trigger, utilizing a wireless communication protocol to transmit (230) a discovery broadcast over a limited range (001), the discovery broadcast being capable of being received by other nodelets within said range (001); and
nodelets within said range (001), which are not already in communication with said node, establishing communication (150) with the node via the first nodelet in response to receipt of the discovery broadcast;
**characterized in that:**
each of the nodelets of the plurality of nodelets is configured to transmit (230) a discovery broadcast in response to a trigger only after it has established communication with the node either directly or via other nodelets.

2. The method of claim 1, wherein utilizing a wireless communication protocol includes utilizing at least one wireless communications protocol selected from the following:
a wireless protocol involving at least one radio frequency, and
a wireless protocol involving at least one infrared frequency.

3. The method of claim 2, wherein utilizing a wireless protocol involving at least one radio frequency includes utilizing at least one protocol selected from the following:
a protocol in compliance with any of the IEEE 802.11 family of specifications;
a protocol in compliance with an ultra wide band protocol;
a protocol in compliance with those used for cellular telephone communication; and
a protocol in compliance with the Bluetooth specification.

4. The method of any preceding claim, wherein respective nodelets establish communication (150) with the node via the first nodelet utilizing a communication protocol that incorporates security features.

5. The method of any preceding claim, wherein nodelets within said range (001), which are already in communication with the node, establish communication via said first nodelet in response to receipt of a discovery broadcast communication (150) from the first nodelet, if communication via the first nodelet is preferred (140) over communication via an alternative nodelet.

6. The method of claim 5, wherein determining if communication via the first nodelet is preferred (140) over communication via an alternative nodelet is based upon at least one of the following criteria:
the signal strength of the discovery broadcast,
the communication range of the respective nodelets,
the remaining battery life of the respective nodelets,
the number of intervening nodelets associated with the respective nodelets, and
the network throughput associated with the respective nodelets.

7. The method of any preceding claim, further comprising:
a nodelet within said limited range (001) of said first nodelet responding to receipt of a discovery broadcast from the first nodelet by transmitting (160) a discovery broadcast after establishing communication with the node via the first nodelet.

8. The method of any preceding claim wherein a first nodelet establishing communication with a node includes the first nodelet establishing communication (150) with the node via at least one intervening nodelet.

9. The method of any preceding claim wherein the discovery broadcast includes at least one of the following:
the number of intervening nodelets in the chain of communication to the node,
the throughput of the communication with the node,
a quality of service marker related to the communication with the node, and
a unique identifier related to the nodelet.

10. The method of any preceding claim wherein detecting (210) a trigger includes at least one of the following:
a timer reaching a certain value,
input data from a user,
receipt of a rediscovery request,
the throughput of the communication with the node, and
receipt of a discovery broadcast.

11. A method according to any preceding claim, wherein communication between a node operable to provide access to a network and a plurality of nodelets comprises:
a nodelet detecting (290) a request to forward a packet, wherein the request includes utilizing a wireless communication protocol;
said nodelet determining (280) whether the packet is to be forwarded either to a node or to a destination nodelet;
said nodelet determining (275; 276) if there is an intervening nodelet; and
forwarding (260; 265; 269) the packet towards either the node, the destination nodelet or the intervening nodelet, respectively, wherein the forwarding includes utilizing a wireless communication protocol.

12. A system comprising a plurality of nodelets and a node operable to provide access to a network, wherein
each of the nodelets is operable to transmit a discovery broadcast over a limited range (001-801) utilizing a wireless communication protocol; and
the node is operable to transmit a discovery broadcast; and
**characterized in that:**
each nodelet of the plurality of nodelets comprises means configured to transmit (230) a discovery broadcast in response to a trigger only after it has established communication with the node either directly or via other nodelets.

13. The system of claim 12 wherein the node and at least one nodelet comprise means capable of, during operation, being in communication with one another at least in part due to a wireless protocol involving at least one radio frequency spectrum including at least one protocol selected from the following:
a protocol in compliance with any of the IEEE802. 11 family of specifications;
a protocol in compliance with an ultra wide band protocol;
a protocol in compliance with those used for cellular telephone communication; and
a protocol in compliance with the Bluetooth specification.

14. The system of claim 12 or claim 13, wherein
the plurality of nodelets comprises at least one intervening nodelet, and wherein
the at least one intervening nodelet is capable of, during operation, forwarding packets from the at least one nodelet to the node, or vice versa.

15. The system of any preceding claim, wherein
the plurality of nodelets comprises more than one intervening nodelets, and wherein
a first intervening nodelet is capable of, during operation, forwarding packets from the node to a nodelet, or vice versa, via a second intervening nodelet.

16. An article comprising:
a storage medium having a plurality of machine accessible instructions, wherein when the instructions are executed by a processor, the instructions provide for
establishing communication with a node; and
in response to a trigger, utilizing a wireless communication protocol to transmit (230) a discovery broadcast over a limited range (001), the discovery broadcast being capable of being received by other nodelets within said range (001); and
**characterized in that:**
the instructions provide for transmitting (230) a discovery broadcast in response to a trigger only after establishing communication with the node either directly or via other nodelets.

17. The article of claim 16, wherein instructions for utilizing a wireless communication protocol includes instructions for utilizing at least one wireless communications protocol selected from the following list:
a wireless protocol involving at least one frequency within the radio spectrum, and
a wireless protocol involving at least one frequency within the infrared spectrum.

18. The article of claim 16, wherein instructions for utilizing a wireless protocol involving signals at a frequency within the radio spectrum includes instructions for utilizing at least one protocol selected from the following:
a protocol in compliance with any of the IEEE 802.11 family of specifications;
a protocol in compliance with an ultra wide band protocol;
a protocol in compliance with those used for cellular telephone communication;
and a protocol in compliance with the Bluetooth specification.

19. The article of claim 16, wherein instructions for establishing communication with the node, via the first nodelet, includes instructions for using a communication protocol that incorporates security features.

20. The article of claim 16, further comprising instructions for being in communication with the node; and wherein
communication, via said first nodelet in response to receipt of a discovery broadcast communication (150) from the first nodelet, is established if communication via the first nodelet is preferred (140) over communication via an alternative nodelet.

21. The article of claim 20, wherein instructions for determining if communication via the first nodelet is preferred over communication via the second nodelet includes instructions for preferring one nodelet over another based upon at least one of the following criteria: the signal strength of the discovery broadcast, the communication range of the respective nodelets, the quality of service associated with the respective nodelets, the remaining battery life of the respective nodelets, the number of intervening nodelets associated with the respective nodelets, and the network throughput associated with the respective nodelets.

22. The article of claim 16 wherein instructions for establishing communication with a node includes instructions for establishing communication (150) with a node via at least one intervening nodelet.

23. The article of claim 16 wherein the discovery broadcast includes at least one piece of information selected from the following: the number of intervening nodelets in the chain of communication to the node, the throughput of the communication with the node, a quality of service marker related to the communication with the node, and a unique identifier related to the nodelet.

## Patentansprüche

1. Verfahren zum Einrichten von Kommunikation zwischen mehreren Unterknoten und einem Knoten, der dazu dient, Zugang zu einem Netzwerk zu gewähren, wobei jeder der Unterknoten dazu dient, eine Ermittlungssendung über einen beschränkten Bereich (001-801) unter Verwendung eines kabellosen Kommunikationsprotokolls zu übertragen, wobei das Verfahren umfasst:
ein erster Unterknoten richtet Kommunikation mit dem Knoten ein;
der erste Unterknoten verwendet auf einen Auslöser hin ein kabelloses Kommunikationsprotokoll, um eine Ermittlungssendung über einen beschränkten Bereich (001) zu übertragen (230), wobei die Ermittlungssendung von dem anderen Unterknoten innerhalb des Bereiches (001) empfangen werden kann; und
Unterknoten innerhalb des Bereichs (001), die sich nicht schon in Kommunikation mit dem Knoten befinden, richten Kommunikation (150) mit dem Knoten über den ersten Unterknoten auf den Empfang der Ermittlungssendung hin ein;
**gekennzeichnet dadurch, dass:**
jeder der mehreren Unterknoten dazu eingerichtet ist, nur dann eine Ermittlungssendung auf einen Auslöser hin zu übertragen (230), nachdem er eine Kommunikation mit dem Knoten entweder direkt oder über andere Unterknoten eingerichtet hat.

2. Verfahren nach Anspruch 1, wobei das Verwenden eines kabellosen Kommunikationsprotokolls das Verwenden mindestens eines der folgenden kabellosen Kommunikationsprotokolle beinhaltet:
ein kabelloses Protokoll, das mindestens eine Funkfrequenz einsetzt, und
ein kabelloses Protokoll, das mindestens eine Infrarotfrequenz einsetzt.

3. Verfahren nach Anspruch 2, wobei das Verwenden eines kabellosen Protokolls, das mindestens eine Funkfrequenz einsetzt, das Verwenden mindestens eines der folgenden Protokolle beinhaltet:
ein Protokoll nach einer der Spezifikationen der IEEE 802.11-Familie;
ein Protokoll gemäß einem Ultrabreitbandprotokoll;
ein Protokoll gemäß jenen für zellulare Telefonkommunikation verwendeten; und
ein Protokoll gemäß der Bluetooth-Spezifikation.

4. Verfahren nach einem der vorhergehenden Ansprüche, wobei die jeweiligen Unterknoten Kommunikation (150) mit dem Knoten über den ersten Unterknoten unter Verwendung eines Kommunikationsprotokolls, das Sicherheitsfunktionen beinhaltet, einrichten.

5. Verfahren nach einem der vorhergehenden Ansprüche, wobei Unterknoten innerhalb des Bereichs (001), die sich bereits in Kommunikation mit dem Knoten befinden, Kommunikation über den ersten Unterknoten auf den Empfang einer Ermittlungssendungskommunikation (150) vom ersten Unterknoten hin einrichten, falls Kommunikation über den ersten Unterknoten der Kommunikation über einen alternativen Unterknoten vorgezogen wird (140).

6. Verfahren nach Anspruch 5, wobei die Feststellung, ob Kommunikation über den ersten Unterknoten der Kommunikation über einen alternativen Unterknoten vorzuziehen ist (140), auf mindestens einem der folgenden Kriterien basiert:
der Signalstärke der Ermittlungssendung,
dem Kommunikationsbereich der jeweiligen Unterknoten,
der verbleibenden Batterielebenszeit der jeweiligen Unterknoten,
der Anzahl von mit den jeweiligen Unterknoten verknüpften intervenierenden Unterknoten, und
dem sich auf die jeweiligen Unterknoten beziehenden Netzwerkdurchsatz.

7. Verfahren nach einem der vorhergehenden Ansprüche, ferner umfassend den folgenden Schritt:
ein Unterknoten innerhalb des beschränkten Bereichs (001) des ersten Unterknotens reagiert auf den Empfang einer Ermittlungssendung vom ersten Unterknoten hin, indem er eine Ermittlungssendung überträgt (160), nachdem er Kommunikation mit dem Knoten über den ersten Unterknoten eingerichtet hat.

8. Verfahren nach einem der vorhergehenden Ansprüche, wobei das Einrichten von Kommunikation eines ersten Unterknotens mit einem Knoten das Einrichten von Kommunikation (150) des ersten Unterknotens mit dem Knoten über mindestens einen intervenierenden Unterknoten beinhaltet.

9. Verfahren nach einem der vorhergehenden Ansprüche, wobei die Ermittlungssendung mindestens eines der Folgenden umfasst:
die Anzahl intervenierender Unterknoten in der Kommunikationskette zum Knoten,
den Durchsatz der Kommunikation mit dem Knoten,
eine mit der Kommunikation mit dem Knoten verbundene Dienstqualitätsmarkierung, und
eine sich auf den Unterknoten beziehende eindeutige Identifikation.

10. Verfahren nach einem der vorhergehenden Ansprüche, wobei das Detektieren (210) eines Auslösers mindestens eines der Folgenden beinhaltet:
einen Zeitmesser, der einen bestimmten Wert erreicht,
Eingabedaten von einem Benutzer,
Empfang einer Neuermittlungsanfrage,
den Durchsatz der Kommunikation mit dem Knoten und den Empfang einer Ermittlungssendung.

11. Verfahren nach einem der vorhergehenden Ansprüche, wobei Kommunikation zwischen einem Knoten, der Zugang zu einem Netzwerk gewährt, und mehreren Unterknoten umfasst:
ein Unterknoten detektiert (290) eine Anfrage nach Weiterleitung eines Pakets, wobei die Anfrage das Verwenden eines kabellosen Kommunikationsprotokolls beinhaltet;
der Unterknoten bestimmt (280), ob das Paket entweder zu einem Knoten oder zu einem Zielunterknoten weiterzuleiten ist;
der Unterknoten bestimmt (275; 276), ob es einen intervenierenden Unterknoten gibt; und
das Paket wird entweder zum Knoten, zum Zielunterknoten oder zum intervenierenden Unterknoten weitergeleitet (260; 265; 269), wobei das Weiterleiten das Verwenden eines kabellosen Kommunikationsprotokolls beinhaltet.

12. System umfassend mehrere Unterknoten und einen Knoten, der dazu dient, Zugang zu einem Netzwerk zu gewähren, wobei
jeder der Unterknoten dazu dient, eine Ermittlungssendung über einen begrenzten Bereich (001-801) unter Verwendung eines kabellosen Kommunikationsprotokolls zu übertragen; und
der Knoten dazu dient, eine Ermittlungssendung zu übertragen; und
**gekennzeichnet dadurch, dass:**
jeder der mehreren Unterknoten eine Einrichtung umfasst, die dazu ausgelegt ist, eine Ermittlungssendung auf einen Auslöser hin nur zu übertragen, nachdem er die Kommunikation mit dem Knoten entweder direkt oder über andere Unterknoten eingerichtet hat.

13. System nach Anspruch 12, wobei der Knoten und wenigstens ein Unterknoten Einrichtungen umfassen, die sich während des Betriebs in Kommunikation miteinander zumindest teilweise auf der Basis eines kabellosen Protokolls, das mindestens ein Funkfrequenzspektrum einsetzt, befinden, wobei dieses mindestens eines der folgenden Protokolle enthält:
ein Protokoll gemäß einer der Spezifikationen der IEEE 802.11-Familie;
ein Protokoll gemäß einem Ultrabreitbandprotokoll;
ein Protokoll gemäß jenen für zellulare Telefonkommunikation verwendeten; und
ein Protokoll gemäß der Bluetooth-Spezifikation.

14. System nach Anspruch 12 oder 13, wobei
die mehreren Unterknoten mindestens einen intervenierenden Unterknoten umfassen, und wobei
der mindestens eine intervenierende Unterknoten während des Betriebs Pakete vom mindestens einen Unterknoten zu dem Knoten oder umgekehrt weiterleiten kann.

15. System nach einem der vorhergehenden Ansprüche, wobei
die mehreren Unterknoten mehr als einen intervenierenden Unterknoten umfassen, und wobei
ein erster intervenierender Unterknoten während des Betriebs Pakete vom Knoten über einen zweiten intervenierenden Unterknoten an einen Unterknoten oder umgekehrt weiterleiten kann.

16. Gegenstand, umfassend:
ein Speichermedium mit mehreren maschinenzugreifbaren Anweisungen, wobei die Anweisungen, wenn sie von einem Prozessor ausgeführt werden, für Folgendes sorgen:
Einrichten von Kommunikation mit einem Knoten und
Verwenden eines kabellosen Kommunikationsprotokolls auf einen Auslöser hin, um eine Ermittlungssendung über einen begrenzten Bereich (001) zu übertragen (230), wobei die Ermittlungssendung von anderen Unterknoten innerhalb des Bereichs (001) empfangen werden kann; und
**gekennzeichnet dadurch, dass:**
die Anweisungen für das Übertragen (230) einer Ermittlungssendung auf einen Auslöser hin nur sorgen, nachdem Kommunikation mit dem Knoten entweder direkt oder über andere Unterknoten eingerichtet worden ist.

17. Gegenstand nach Anspruch 16, wobei Anweisungen zum Verwenden eines kabellosen Kommunikationsprotokolls solche Anweisungen zum Verwenden mindestens eines der folgenden kabellosen Kommunikationsprotokolle enthalten:
ein kabelloses Protokoll, das mindestens eine Frequenz innerhalb des Funkspektrums einsetzt, und
ein kabelloses Protokoll, das mindestens eine Frequenz innerhalb des Infrarotspektrums einsetzt.

18. Gegenstand nach Anspruch 16, wobei Anweisungen zum Verwenden eines kabellosen Protokolls, das Signale mit einer Frequenz innerhalb des Funkspektrums einsetzt, solche Anweisungen zum Verwenden mindestens eines der folgenden Protokolle enthalten:
ein Protokoll gemäß einer der Spezifikationen der IEEE 802.11-Familie;
ein Protokoll gemäß einem Ultrabreitbandprotokoll;
ein Protokoll gemäß jenen für zellulare Telefonkommunikation verwendeten;
und ein Protokoll gemäß der Bluetooth-Spezifikation.

19. Gegenstand nach Anspruch 16, wobei Anweisungen zum Einrichten von Kommunikation mit dem Knoten über den ersten Unterknoten solche Anweisungen zum Verwenden eines Kommunikationsprotokolls, das Sicherheitsfunktionen enthält, enthalten.

20. Gegenstand nach Anspruch 16, ferner umfassend Anweisungen dafür, in Kommunikation mit dem Knoten zu stehen, wobei
Kommunikation über den ersten Unterknoten auf den Empfang einer Ermittlungssendungskommunikation (150) vom ersten Unterknoten hin eingerichtet wird, falls Kommunikation über den ersten Unterknoten der Kommunikation über einen alternativen Unterknoten vorgezogen wird (140).

21. Gegenstand nach Anspruch 20, wobei Anweisungen zum Bestimmen, ob Kommunikation über den ersten Unterknoten der Kommunikation über den zweiten Unterknoten vorzuziehen ist, solche Anweisungen zum Vorziehen eines Unterknotens gegenüber einem anderen auf der Grundlage mindestens eines der folgenden Kriterien enthalten: der Signalstärke der Ermittlungssendung, dem Kommunikationsbereich der jeweiligen Unterknoten, der den jeweiligen Unterknoten entsprechenden Dienstqualität, der verbleibenden Batterielebenszeit der jeweiligen Unterknoten, der Anzahl von zu den jeweiligen Unterknoten gehörenden intervenierenden Unterknoten, und dem den jeweiligen Unterknoten entsprechenden Netzwerkdurchsatz.

22. Gegenstand nach Anspruch 16, wobei Anweisungen zum Einrichten von Kommunikation mit einem Knoten solche Anweisungen zum Einrichten von Kommunikation (150) mit einem Knoten über mindestens einen intervenierenden Unterknoten enthalten.

23. Gegenstand nach Anspruch 16, wobei die Ermittlungssendung mindestens eine der folgenden Informationen enthält: die Anzahl intervenierender Unterknoten in der Kommunikationskette zum Knoten, den Durchsatz der Kommunikation mit dem Knoten, eine sich auf die Kommunikation mit dem Knoten beziehende Dienstqualitätsmarkierung und eine sich auf den Unterknoten beziehende eindeutige Identifikation.

## Revendications

1. Procédé d'établissement d'une communication entre une pluralité de micro-noeuds et un noeud ayant pour fonction d'assurer l'accès à un réseau, dans lequel chacun des micro-noeuds a pour fonction de transmettre un signal de diffusion de découverte sur une distance limitée (001-801) en utilisant un protocole de communication sans fil, le procédé comprenant :
l'établissement par un premier micro-noeud d'une communication avec le noeud ;
l'utilisation par le premier micro-noeud, en réponse à un signal de déclenchement, d'un protocole de communication sans fil pour transmettre (230) un signal de diffusion de découverte sur une distance limitée (001), le signal de diffusion de découverte pouvant être reçu par d'autres micro-noeuds en deçà de ladite distance (001) ; et
l'établissement par des micro-noeuds se trouvant en deçà de ladite distance (001), qui ne sont pas déjà en communication avec ledit noeud, d'une communication (150) avec le noeud par l'intermédiaire du premier micro-noeud en réponse à la réception du signal de diffusion de découverte ;
**caractérisé en ce que :**
chacun des micro-noeuds de la pluralité de micro-noeuds est configuré pour ne transmettre (230) un signal de diffusion de découverte en réponse à un signal de déclenchement qu'après qu'il a établi une communication avec le noeud, soit directement, soit par l'intermédiaire d'autres micro-noeuds.

2. Procédé selon la revendication 1, dans lequel l'utilisation d'un protocole de communication sans fil comprend l'utilisation d'au moins un protocole de communication sans fil sélectionné parmi les suivants :
un protocole sans fil faisant intervenir au moins une fréquence radio ; et
un protocole sans fil faisant intervenir au moins une fréquence infrarouge.

3. Procédé selon la revendication 2, dans lequel l'utilisation d'un protocole sans fil faisant intervenir au moins une fréquence radio comprend l'utilisation d'au moins un protocole sélectionné parmi les suivants :
un protocole conforme à l'une quelconque de la famille de spécifications IEEE 802.11 ;
un protocole conforme à un protocole à ultralarge bande ;
un protocole conforme à ceux qui sont utilisés pour les communications téléphoniques cellulaires ; et
un protocole conforme à la spécification Bluetooth.

4. Procédé selon l'une quelconque des revendications précédentes, dans lequel des micro-noeuds respectifs établissent une communication (150) avec le noeud par l'intermédiaire du premier micro-noeud en utilisant un protocole de communication qui intègre des fonctionnalités de sécurité.

5. Procédé selon l'une quelconque des revendications précédentes, dans lequel des micro-noeuds se trouvant en deçà de ladite distance (001) et qui sont déjà en communication avec le noeud, établissent une communication par l'intermédiaire dudit premier micro-noeud en réponse à la réception d'une communication de diffusion de découverte (150) en provenance du premier micro-noeud, si la communication par l'intermédiaire du premier micro-noeud est préférée (140) à une communication par l'intermédiaire d'un autre micro-noeud.

6. Procédé selon la revendication 5, dans lequel le fait de déterminer si une communication par l'intermédiaire du premier micro-noeud est préférée (140) à une communication par l'intermédiaire d'un autre micro-noeud se fonde sur au moins l'un des critères suivants :
l'intensité du signal de diffusion de découverte,
la distance de communication des micro-noeuds respectifs,
l'autonomie restante des batteries des micro-noeuds respectifs,
le nombre de micro-noeuds intermédiaires associés aux micro-noeuds respectifs, et
le débit du réseau associé aux micro-noeuds respectifs.

7. Procédé selon l'une quelconque des revendications précédentes, comprenant en outre :
un micro-noeud situé en deçà de ladite distance limitée (001) dudit premier micro-noeud répondant à la réception d'un signal de diffusion de découverte en provenance du premier micro-noeud en transmettant (160) un signal de diffusion de découverte après établissement d'une communication avec le noeud par l'intermédiaire du premier micro-noeud.

8. Procédé selon l'une quelconque des revendications précédentes, dans lequel l'établissement par un premier micro-noeud d'une communication avec un noeud comprend l'établissement par le premier micro-noeud d'une communication (150) avec le noeud par l'intermédiaire d'au moins un micro-noeud intermédiaire.

9. Procédé selon l'une quelconque des revendications précédentes, dans lequel le signal de diffusion de découverte comprend au moins l'un des éléments suivants :
le nombre de micro-noeuds intermédiaires dans la chaîne de communication avec le noeud,
le débit de la communication avec le noeud,
un marqueur de qualité de service lié à la communication avec le noeud, et
un identificateur unique lié au micro-noeud.

10. Procédé selon l'une quelconque des revendications précédentes, dans lequel la détection (210) d'un signal de déclenchement comprend au moins l'un des éléments suivants :
le fait qu'un compteur de temps atteint une certaine valeur,
des données d'entrée provenant d'un utilisateur,
la réception d'une demande de redécouverte,
le débit de la communication avec le noeud, et
la réception d'un signal de diffusion de découverte.

11. Procédé selon l'une quelconque des revendications précédentes, dans lequel la communication entre un noeud ayant pour fonction d'assurer l'accès à un réseau et une pluralité de micro-noeuds comprend :
la détection (290) par un micro-noeud d'une demande de réexpédition d'un paquet, dans lequel la demande comprend l'utilisation d'un protocole de communication sans fil ;
la détermination (280) par ledit micro-noeud du fait de savoir si le paquet doit être réexpédié soit vers un noeud soit vers un micro-noeud de destination ;
la détermination (275 ; 276) par ledit micro-noeud du fait de savoir s'il y a un micro-noeud intermédiaire ; et
la réexpédition (260 ; 265 ; 269) du paquet vers l'un ou l'autre du noeud, du micro-noeud de destination, ou du micro-noeud intermédiaire, respectivement, la réexpédition comprenant l'utilisation d'un protocole de communication sans fil.

12. Système comprenant une pluralité de micro-noeuds, et un noeud ayant pour fonction de permettre un accès à un réseau, dans lequel
chacun des micro-noeuds a pour fonction de transmettre un signal de diffusion de découverte sur une distance limitée (001-801) en utilisant un protocole de communication sans fil ; et
le noeud a pour fonction de transmettre un signal de diffusion de découverte ; et
**caractérisé en ce que :**
chaque micro-noeud de la pluralité de micro-noeuds comprend un moyen configuré pour ne transmettre (230) un signal de diffusion de découverte en réponse à un message de déclenchement qu'après qu'il a établi une communication avec le noeud soit directement, soit par l'intermédiaire d'autres micro-noeuds.

13. Système selon la revendication 12, dans lequel le noeud et au moins un micro-noeud comprennent des moyens capables, pendant leur fonctionnement, d'être en communication l'un avec l'autre au moins en partie du fait d'un protocole sans fil faisant intervenir au moins un spectre de fréquences radio, comprenant au moins un protocole sélectionné parmi les suivants :
un protocole conforme à l'une quelconque de la famille de spécifications IEEE 802.11 ;
un protocole conforme à un protocole à ultralarge bande ;
un protocole conforme à ceux qui sont utilisés pour les communications téléphoniques cellulaires ; et
un protocole conforme à la spécification Bluetooth.

14. Système selon la revendication 12 ou 13, dans lequel :
la pluralité de micro-noeuds comprend au moins un micro-noeud intermédiaire, et dans lequel :
l'au moins un micro-noeud intermédiaire est capable, pendant son fonctionnement, de réexpédier des paquets de l'au moins un micro-noeud vers le noeud, ou inversement.

15. Système selon l'une quelconque des revendications précédentes, dans lequel :
la pluralité de micro-noeuds comprend plus d'un micro-noeud intermédiaire, et dans lequel :
un premier micro-noeud intermédiaire est capable, pendant son fonctionnement, de réexpédier des paquets du noeud vers un micro-noeud, ou inversement, par l'intermédiaire d'un deuxième micro-noeud intermédiaire.

16. Article comprenant :
un support de stockage ayant une pluralité d'instructions accessibles par machine, dans lequel, lorsque les instructions sont exécutées par un processeur, les instructions sont destinées à :
établir une communication avec un noeud ; et
en réponse à un signal de déclenchement, utiliser un protocole de communication sans fil pour transmettre (230) un message de diffusion de découverte sur une distance limitée (001), le signal de diffusion de découverte pouvant être reçu par d'autres micro-noeuds en deçà de ladite distance (001) ; et
**caractérisé en ce que :**
les instructions sont destinées à ne transmettre (230) un signal de diffusion de découverte en réponse à un signal de déclenchement qu'après établissement d'une communication avec le noeud soit directement, soit par l'intermédiaire d'autres micro-noeuds.

17. Article selon la revendication 16, dans lequel les instructions destinées à utiliser un protocole de communication sans fil comprennent des instructions destinées à utiliser au moins un protocole de communication sans fil sélectionné dans la liste suivante :
un protocole sans fil faisant intervenir au moins une fréquence du spectre radio, et
un protocole sans fil faisant intervenir au moins une fréquence du spectre infrarouge.

18. Article selon la revendication 16, dans lequel les instructions destinées à utiliser un protocole sans fil faisant intervenir des signaux à une fréquence du spectre radio comprennent des instructions destinées à utiliser au moins un protocole sélectionné parmi les suivants :
un protocole conforme à l'une quelconque de la famille de spécifications IEEE 802.11 ;
un protocole conforme à un protocole à ultralarge bande ;
un protocole conforme à ceux utilisés pour les communications téléphoniques cellulaires ; et
un protocole conforme à la spécification Bluetooth.

19. Article selon la revendication 16, dans lequel les instructions destinées à établir une communication avec le noeud par l'intermédiaire du premier micro-noeud comprennent des instructions destinées à utiliser un protocole de communication qui intègre des fonctionnalités de sécurité.

20. Article selon la revendication 16, comprenant en outre des instructions permettant une mise en communication avec le noeud ; et dans lequel :
la communication par l'intermédiaire du premier micro-noeud en réponse à la réception d'une communication de diffusion de découverte (150) en provenance du premier micro-noeud, est établie si la communication par l'intermédiaire du premier micro-noeud est préférée (140) à une communication par l'intermédiaire d'un autre micro-noeud.

21. Article selon la revendication 20, dans lequel les instructions destinées à déterminer si une communication par l'intermédiaire du premier micro-noeud est préférée à une communication par l'intermédiaire du deuxième micro-noeud comprennent des instructions destinées à préférer un micro-noeud à un autre sur la base d'au moins l'un des critères suivants : l'intensité du signal de diffusion de découverte, la distance de communication des micro-noeuds respectifs, la qualité de service associée aux micro-noeuds respectifs, l'autonomie restante de la batterie des micro-noeuds respectifs, le nombre de micro-noeuds intermédiaires associés aux micro-noeuds respectifs, et le débit du réseau associé aux micro-noeuds respectifs.

22. Article selon la revendication 16, dans lequel les instructions destinées à établir une communication avec un noeud comprennent des instructions destinées à établir une communication (150) avec un noeud par l'intermédiaire d'au moins un micro-noeud intermédiaire.

23. Article selon la revendication 16, dans lequel le signal de diffusion de découverte comprend au moins un élément d'information sélectionné parmi les suivants : le nombre de micro-noeuds intermédiaires dans la chaîne de communication avec le noeud, le débit de la communication avec le noeud, un marqueur de qualité de service lié à la communication avec le noeud et un identificateur unique lié au micro-noeud.
